# FASCICULE DE BREVET EUROPEEN

(11) **EP 2 204 713 B1**
(45) Date de publication et mention de la délivrance du brevet: **25.04.2012**
(21) Numéro de dépôt: 09013397.6
(22) Date de dépôt: 23.10.2009
(51) Int. Cl.: G05B 23/02

(54) **Procédé de contrôle de l'intégrité d'un systéme avionique et dispositif de contrôle pour mettre en ouvre ledit procédé**
Verfahren zur Kontrolle der Integrität eines Flugzeugsystems und Kontrollvorrichtung zur Umsetzung des besagten Verfahrens
Method for controlling the integrity of an avionics system and control device for implementing said method

(30) Priorité: 03.11.2008 FR 0806109
(43) Date de publication de la demande: 07.07.2010
(73) Titulaire: EUROCOPTER, 13725 Marignane Cédex (FR)
(72) Inventeur: Piolet, Philippe, 13007 Marseille (FR); Germanetti, Serge, 13005 Marseille (FR); Guillanton, Erwan, 13090 Aix en Provence (FR)
(74) Mandataire: GPI & Associés

(56) Documents cités:
- FR-A- 2 899 050
- US-A- 5 111 402

## Description

La présente invention se rapporte au domaine technique général de la vérification et du contrôle de l'intégrité de systèmes et d'équipements aéronautiques embarqués.

La présente invention concerne plus particulièrement un contrôle de l'intégrité des installations électriques de systèmes avioniques embarqués et notamment des câblages électriques.

On connaît des systèmes avioniques qui sont, à leur livraison, déjà chargés avec leur logiciel de fonctionnement. Le chargement d'un tel logiciel dans les systèmes avioniques est en général réalisé en laboratoire ou sur des bancs qui simulent l'environnement de ces systèmes avioniques.

Les solutions connues pour vérifier l'intégrité d'un système avionique en termes d'installations électriques et d'acquisition et de transmission de données, comportent en général plusieurs étapes.

Une première étape consiste à vérifier les câblages électriques par exemple grâce à des essais de continuité et de claquage.

Une seconde étape consiste à vérifier les composants ou les équipements du système avionique, par exemple lors d'essais en laboratoire ou sur banc.

Une troisième étape consiste ensuite à contrôler le système avionique installé à bord d'un aéronef par exemple par l'intermédiaire d'essais du genre fonctionnels. Ces essais peuvent être mis en oeuvre par exemple en déconnectant un certain nombre de connecteurs. Ces solutions nécessitent la présence d'un logiciel opérationnel à bord.

Ces solutions connues présentent cependant un certain nombre d'inconvénients.

Les principaux inconvénients résultent du nombre d'étapes différentes que ces solutions mettent en oeuvre, en faisant intervenir des équipes de personnels différentes ainsi que des durées relativement longues desdites étapes.

Un autre inconvénient non négligeable est lié au risque de détérioration des câblages et/ou des équipements, principalement au niveau des connecteurs lors des opérations de connexion et de déconnexion pour réaliser des essais.

Il existe actuellement, notamment avec les nouveaux systèmes avioniques, un souhait de charger lesdits systèmes avec leur logiciel de fonctionnement, alors que lesdits systèmes sont déjà installés dans les aéronefs. US 5 111 902 divulgue un procédé de contrôle de l'intégrité d'au moins un composant d'un sytème avionique.

Afin d'effectuer une telle installation de logiciel dans un système avionique embarqué, il est nécessaire de disposer d'un système avionique d'une part installé à bord de l'aéronef et d'autre part présentant une intégrité sur le plan du câblage électrique.

Le but de la présente invention vise donc à s'affranchir des inconvénients précités et à contrôler l'intégrité d'un système avionique embarqué, en termes d'installations électriques et en termes d'acquisition et de transmission de données, au préalable d'un chargement ou d'une installation du logiciel dans le système avionique.

L'objet de la présente invention vise par conséquent à fournir un nouveau procédé de contrôle d'intégrité notamment en termes d'installations électriques d'un système avionique.

L'objet de la présente invention vise également à mettre à la disposition d'opérateurs un nouveau dispositif de contrôle pour mettre en oeuvre ledit procédé de contrôle d'intégrité d'un système avionique.

Les objets assignés à l'invention sont atteints à l'aide d'un procédé de contrôle de l'intégrité d'au moins un composant d'un système avionique installé dans un aéronef, ledit procédé consistant à contrôler l'intégrité dudit composant en termes d'installation électrique et d'acquisition et de transmission de données, caractérisé en ce qu'il consiste à :
- a) utiliser un réseau Ethernet reliant le système avionique à un ordinateur de contrôle pour échanger des signaux de contrôle,
- b) générer à l'aide de l'ordinateur de contrôle des premiers signaux de contrôle transmis au composant et/ou acquérir des seconds signaux de contrôle provenant du composant,
- c) utiliser des moyens de lecture et d'écriture de données d'un calculateur du système avionique pour générer des données de référence se rapportant au composant et transmises à l'ordinateur de contrôle via le réseau Ethernet,
- d) afficher à l'aide d'un écran relié à l'ordinateur de contrôle, les données de référence et les signaux de contrôle à des fins de surveillance et/ou de comparaison par un opérateur,
- e) et enregistrer selon le cas les données de référence et les signaux de contrôle dans une mémoire de l'ordinateur de contrôle.

Eventuellement, durant l'étape e), on sélectionne les données de référence et les signaux de contrôle, puis on enregistre ces données de référence et ces signaux de contrôle dans une mémoire de l'ordinateur de contrôle.

Selon un exemple de mise en oeuvre, le procédé conforme à l'invention consiste à contrôler l'ensemble des composants du système avionique.

Selon un exemple de mise en oeuvre, le procédé conforme à l'invention consiste à afficher les résultats des fonctions de test automatiques au démarrage intégrés au calculateur du système avionique et se rapportant à chaque composant du système avionique. Une telle amélioration permet d'accéder aux tests du matériel (hardware) des équipements ce qui évite chercher une panne dans les câblages qui serait en fait une panne d'une entrée ou d'une sortie d'un des composants du système sur lequel est appliquée la fonction de test.

Selon un exemple de mise en oeuvre, le procédé conforme à l'invention consiste à choisir en tant que premiers signaux de contrôle des valeurs de stimulation et à injecter les valeurs de stimulation en temps réel aux bornes de sortie de l'interface de sortie de chaque composant.

Selon un exemple de mise en oeuvre, le procédé conforme à l'invention consiste à injecter les valeurs de stimulation individuellement l'une après l'autre.

Le procédé consiste ensuite à vérifier, par l'intermédiaire du calculateur du système avionique, si une réaction appropriée à ces valeurs de stimulation injectées est observée sur les équipements ciblés. Une réaction est considérée comme appropriée, si elle est traduite par des données de référence.

Selon un exemple de mise en oeuvre, le procédé conforme à l'invention consiste à acquérir en temps réel et en tant que seconds signaux de contrôle, soit les états de fonctionnement de toutes les bornes d'entrée de l'interface d'entrée de chaque composant, soit les valeurs physiques mesurées aux dites bornes d'entrée.

Les signaux prélevés sur les entrées sont ensuite comparés à des données de référence. Les données de référence sont, selon un exemple de mise en oeuvre du procédé conforme à l'invention, par exemple des valeurs électriques prédéfinies, remplaçant des données issues de capteurs, et injectées dans le système avionique.

Selon un autre exemple de mise en oeuvre du procédé conforme à l'invention, les données de référence sont générées grâce à un système de test automatique, intégré en phase de production au système avionique.

Dans le cadre du procédé conforme à l'invention, il est envisageable de solliciter un capteur délivrant des signaux pour définir des données de référence. Un tel signal est par exemple une mesure de tension électrique d'une batterie alimentant un appareil ou un composant.

Selon un exemple de mise en oeuvre conforme à l'invention, le procédé consiste à acquérir les signaux de contrôle se rapportant aux bornes d'entrée selon une fréquence d'environ 2 Hz.

Selon un exemple de mise en oeuvre, le procédé conforme à l'invention consiste à contrôler des fonctionnalités d'un aéronef pilotées par le système avionique, à choisir dans la liste suivante: gestion du carburant, gestion des moteurs, gestion de la flottabilité, gestion de l'extinction des incendies, gestion du système hydraulique, gestion du système électrique ou autres.

Selon un exemple de mise en oeuvre, le procédé conforme à l'invention consiste à intégrer dans le logiciel de fonctionnement de chaque équipement géré par le système avionique, des instructions de contrôle pour générer et acquérir des signaux fonctionnellement compatibles avec l'ordinateur de contrôle.

Selon un exemple de mise en oeuvre, le procédé conforme à l'invention consiste à inhiber les instructions de contrôle dans un état de fonctionnement opérationnel de l'aéronef et à activer lesdites instructions de contrôle dans un état de maintenance de l'aéronef.

Le système de contrôle comporte des états de fonctionnement et chaque état de fonctionnement comporte un ou plusieurs modes de fonctionnement. A titre d'exemple, un état dit « opérationnel » comporte notamment un mode d'initialisation, un mode normal et un mode dégradé. Un état dit « de maintenance » comporte notamment un mode de test du système embarqué et un mode de chargement ou de déchargement de données.

Les objets assignés à la présente invention sont également atteints à l'aide d'un système de contrôle, pour mettre en oeuvre le procédé de contrôle précité, caractérisé en ce qu'il comprend :
- un ordinateur de contrôle associé à un écran d'affichage ou une interface graphique utilisateur,
- au moins un logiciel pour gérer notamment des signaux de contrôle et des données de référence destinés au contrôle,
- un réseau Ethernet reliant l'ordinateur de contrôle au système avionique ou à au moins un composant du système avionique de manière à échanger notamment des signaux de contrôle et des données de référence,
- des moyens de contrôle embarqués comprenant des moyens de lecture et d'écriture banalisés de signaux et de données de chaque composant,
- et des moyens de transmission embarqués pour acheminer, via le réseau Ethernet, des signaux ou des données entre au moins un composant du système avionique et l'ordinateur de contrôle.

Selon un exemple de réalisation de l'invention, le système de contrôle comprend des moyens pour sélectionner des données et/ou des signaux ainsi que pour enregistrer les données et/ou signaux sélectionnés.

Selon un exemple de réalisation du système de contrôle conforme à l'invention, les moyens de lecture et d'écriture banalisés, intégrés dans chaque composant du système avionique comportent des moyens de traitement de chaînes d'acquisitions analogiques des composants dudit système avionique ainsi que des moyens pour transformer lesdites acquisitions en valeurs digitales, lesquelles sont mises à disposition en temps réel sur un port du réseau Ethernet. Les moyens pour transformer les acquisitions en valeurs digitales comportent un ou plusieurs processeurs, connus en tant que tel.

Les moyens de lecture et d'écriture banalisés sont par exemple réalisés par les équipements ou composants participant déjà au fonctionnement opérationnel du système avionique embarqué.

Selon un exemple de réalisation du système de contrôle conforme à l'invention, les moyens de contrôle et les moyens de transmission sont embarqués dans l'aéronef.

Le système de contrôle conforme à l'invention permet de brancher en entrée et sortie les éléments qui constituent le système avionique en état de fonctionnement opérationnel et d'ajouter une liaison Ethernet qui permettra à l'ordinateur de contrôle externe d'injecter les premiers signaux de contrôle pour stimuler les sorties ou de transférer vers l'extérieur les seconds signaux mesurés en entrée.

Un avantage du système de contrôle conforme à l'invention réside dans sa simplicité et dans sa facilité d'utilisation.

Le procédé de contrôle conforme à l'invention permet de réaliser le contrôle plus rapidement que les méthodes connues, grâce à une étape de contrôle unique.

En outre, la mise en oeuvre du procédé de contrôle conforme à l'invention ne nécessite que l'intervention d'une seule équipe d'opérateurs.

Il est remarquable également que le procédé de contrôle conforme à l'invention permet d'éviter le démontage des connecteurs du système avionique, éliminant par conséquent tout risque de détérioration ou d'erreur de remontage au niveau des installations électriques.

Dans la mesure où le procédé de contrôle est mis en oeuvre avec un système avionique déjà installé à bord de l'aéronef, sans démontage de ses connecteurs, il est possible de contrôler l'ensemble des signaux reçus et émis par le système avionique sans omission.

Un autre avantage est obtenu dans la mesure où il n'est pas nécessaire d'effectuer une quelconque opération de démontage et de remontage du système avionique une fois que ce dernier est installé à bord de l'aéronef, pour vérifier son intégrité.

Un autre avantage de l'invention, réside dans le fait qu'une utilisation d'un laboratoire ou d'un banc de mesures n'est pas requise pour mettre oeuvre le procédé de contrôle conforme à l'invention.

Un autre avantage de l'invention réside dans la possibilité de tester des composants du système avionique, du genre capteurs reliés au calculateur du système avionique, qui ne sont pas nécessairement reliés directement au réseau Ethernet.

Dans le cadre de l'invention, on peut tester le câblage même avant d'avoir développé la fonction opérationnelle logicielle (software) lors du développement de prototypes d'aéronefs, par exemple des hélicoptères. De même, si on a câblé des provisions non utilisées par le logiciel opérationnel du système avionique, ces provisions peuvent être testées, alors que le logiciel opérationnel ne le permettrait pas.

Un autre avantage de l'invention est lié à la possibilité d'utiliser les instructions de contrôle du logiciel dans d'autres applications, par exemple téléchargées dans le système avionique, afin d'automatiser certaines séquences de test par exemple.

L'invention et ses avantages apparaîtront également avec plus de détails dans le cadre de la description qui suit, avec des exemples de réalisation donnés à titre illustratif en référence aux figures annexées qui représentent avec:
- la figure 1, une illustration schématique d'un exemple de réalisation du système de contrôle conforme à l'invention,
- et la figure 2, une autre illustration schématique d'un exemple de réalisation du système de contrôle conforme à l'invention.

Les éléments structurellement et fonctionnellement identiques et présents sur plusieurs figures distinctes, sont affectés d'une seule et même référence.

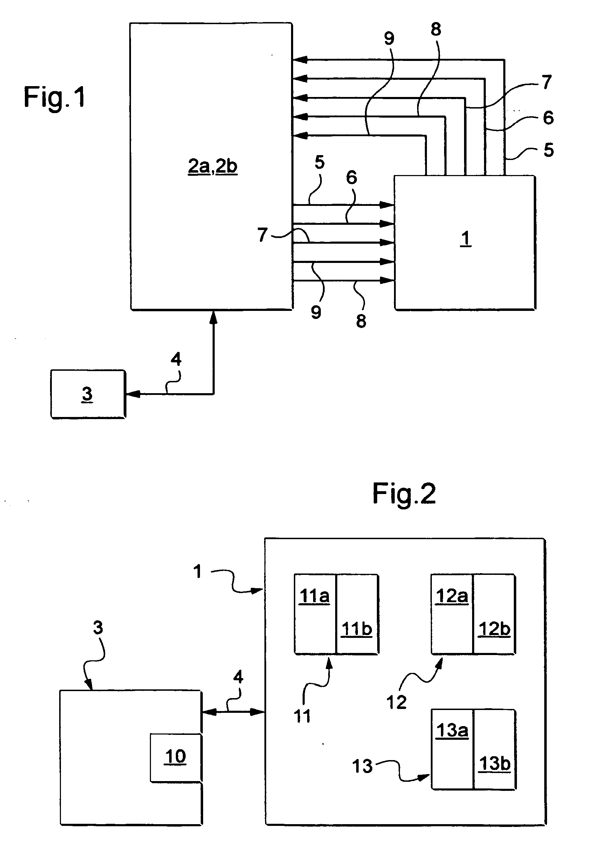

La figure 1 illustre schématiquement un exemple de réalisation et de fonctionnement d'un système de contrôle conforme à l'invention.

Le système de contrôle comprend un système avionique 1 ou au moins un composant dudit système avionique 1, installé dans un aéronef.

Le système de contrôle comprend également des moyens de contrôle 2a embarqués, lesquels comportent des moyens de lecture et d'écriture banalisés de signaux de contrôle et de données de référence se rapportant à chaque composant du système avionique 1. Le système de contrôle conforme à l'invention utilise donc des moyens de contrôle 2a intégrés dans chaque composant du système avionique 1.

Le système de contrôle conforme à l'invention comprend également des moyens de transmission 2b embarqués pour acheminer des signaux ou des données entre le système avionique 1 ou l'un de ses composants et un ordinateur de contrôle 3. Les moyens de transmission 2b sont également intégrés dans chaque composant du système avionique 1.

Le système de contrôle peut aussi comprendre des moyens pour sélectionner et enregistrer les données et/ou les signaux.

L'ordinateur de contrôle 3, associé à un écran d'affichage, est par exemple disposé dans une station de maintenance ou d'assemblage au sol et fonctionne grâce à au moins un logiciel permettant de gérer notamment des signaux de contrôle et des données de référence destinés à l'opération de contrôle.

L'ordinateur de contrôle 3 est relié au système avionique 1 ou à l'un au moins de ses composants par l'intermédiaire d'un réseau Ethernet 4, de manière à échanger notamment des signaux de contrôle et des données de référence.

Le système de contrôle conforme à l'invention permet ainsi d'afficher sur un écran des informations ou signaux arrivant sur des bornes d'entrée du système avionique 1 par l'intermédiaire de lignes analogiques 5, de lignes numériques 6, de lignes vidéos 7, de lignes Ethernet 8 ou de lignes discrètes 9.

Les informations ou signaux ainsi affichés sont par exemple des valeurs de tensions électriques, des états de fonctionnement valides ou non valides, des états ouverts ou fermés, actifs ou inactifs ou autres signaux ou états.

Le système de contrôle conforme à l'invention permet également d'injecter des signaux de contrôle, par exemple sous forme de tensions électriques, sur des bornes de sorties des composants du système avionique 1. Une telle injection de signaux de contrôle est alors effectuées sur des lignes analogiques 5, des lignes numériques 6, de lignes Ethernet 8 ou de lignes discrètes 9.

A titre d'exemple, les signaux peuvent également être injectés sur des lignes vidéo 7. Il suffit pour cela de définir la ressource Ethernet pour traiter ce type de signaux.

La figure 2 est une autre illustration schématique d'un exemple de réalisation d'un système de contrôle conforme à l'invention.

L'ordinateur de contrôle 3 comporte un système d'exploitation ou des moyens de calcul 10 comportant le logiciel lui permettant d'opérer le procédé de contrôle conforme à l'invention.

Le système avionique 1 comporte par exemple des composants 11, 12 et 13 présentant chacun respectivement au moins une partie structurelle et fonctionnelle propre 11a, 12a, 13a et au moins une partie de pilotage 11b, 12b, 13b réalisée par un calculateur ou une fonction de calcul particulière du système avionique 1.

Le procédé de contrôle de l'intégrité d'au moins un composant du système avionique installé dans un aéronef consiste à contrôler l'intégrité dudit composant en termes d'installation électrique et d'acquisition et de transmission de données.

Selon une étape a), le procédé de contrôle consiste à utiliser un réseau Ethernet reliant le système avionique à un ordinateur de contrôle pour échanger des signaux de contrôle.

Selon une étape b), le procédé de contrôle consiste à générer à l'aide de l'ordinateur de contrôle des premiers signaux de contrôle transmis au composant et/ou acquérir des seconds signaux de contrôle provenant du composant.

Selon une étape c), le procédé de contrôle consiste à utiliser des moyens de lecture et d'écriture de données d'un calculateur du système avionique pour générer des données de référence se rapportant au composant et transmises à l'ordinateur de contrôle via le réseau Ethernet.

Selon une étape d), le procédé de contrôle consiste à afficher à l'aide d'un écran relié à l'ordinateur de contrôle, les données de référence et les signaux de contrôle à des fins de surveillance et/ou de comparaison par un opérateur.

Selon une étape e), le procédé de contrôle consiste à enregistrer selon le cas les données de référence et les signaux de contrôle dans une mémoire de l'ordinateur de contrôle.

Selon une variante, les données de référence et les signaux de contrôle devant être enregistrés sont préalablement sélectionnés. La sélection est réalisée en respectant une classification prédéterminée de chaque donnée ou signal. Suivant la classification, il est possible que tout, une partie ou aucune des données de référence et/ou signaux soient enregistrées.

Le procédé de contrôle conforme à l'invention permet par exemple de contrôler l'ensemble des composants du système avionique.

Le procédé de contrôle conforme à l'invention consiste également, selon un exemple de mise en oeuvre, à afficher les résultats des fonctions de test automatiques au démarrage intégrés au calculateur du système avionique et se rapportant à chaque composant du système avionique.

Le procédé de contrôle conforme à l'invention consiste également, selon un exemple de mise en oeuvre, à choisir en tant que premiers signaux de contrôle des valeurs de stimulation et à les injecter en temps réel aux bornes de sortie de l'interface de sortie de chaque composant.

Le procédé de contrôle conforme à l'invention consiste également, selon un exemple de mise en oeuvre, à injecter les valeurs de stimulation individuellement l'une après l'autre.

Le procédé de contrôle conforme à l'invention consiste également, selon un exemple de mise en oeuvre, à acquérir en temps réel et en tant que seconds signaux de contrôle, soit les états de fonctionnement de toutes les bornes d'entrée de l'interface d'entrée de chaque composant, soit les valeurs physiques mesurées aux dites bornes d'entrée.

Le procédé de contrôle conforme à l'invention consiste également, selon un exemple de mise en oeuvre, à acquérir les signaux de contrôle se rapportant aux bornes d'entrée selon une fréquence d'environ 2 Hz.

Le procédé de contrôle conforme à l'invention consiste également, selon un exemple de mise en oeuvre, à contrôler des fonctionnalités d'un aéronef pilotées par le système avionique, du genre gestion du carburant, gestion des moteurs, flottabilité ou gestion de l'extinction des incendies.

Le procédé de contrôle conforme à l'invention consiste également, selon un exemple de mise en oeuvre, à intégrer dans le logiciel de fonctionnement de chaque équipement géré par le système avionique, des instructions de contrôle pour générer et acquérir des signaux fonctionnellement compatibles avec l'ordinateur de contrôle.

Le procédé de contrôle conforme à l'invention consiste également, selon un exemple de mise en oeuvre, à inhiber les instructions de contrôle dans l'état de fonctionnement opérationnel de l'aéronef et à activer lesdites instructions de contrôle dans l'état de maintenance de l'aéronef.

Naturellement, la présente invention est sujette à de nombreuses variations quant à sa mise en oeuvre. Bien que plusieurs modes de réalisations et de mise en oeuvre aient été décrits, on comprend bien qu'il n'est pas concevable d'identifier de manière exhaustive tous les modes possibles. Il est bien sûr envisageable de remplacer un moyen décrit ou un étape décrite par un moyen équivalent ou une étape équivalente sans sortir du cadre de la présente invention.

## Revendications

1. Procédé de contrôle de l'intégrité d'au moins un composant d'un système avionique (1) installé dans un aéronef, ledit procédé consistant à contrôler l'intégrité dudit composant en termes d'installation électrique et d'acquisition et de transmission de données,
**caractérisé en ce qu'**il consiste à :
- a) utiliser un réseau Ethernet (4) reliant le système avionique (1) à un ordinateur de contrôle (3) pour échanger des signaux de contrôle,
- b) générer à l'aide de l'ordinateur de contrôle (3) des premiers signaux de contrôle transmis au composant et/ou acquérir des seconds signaux de contrôle provenant du composant,
- c) utiliser des moyens de lecture et d'écriture de données d'un calculateur du système avionique (1) pour générer des données de référence se rapportant au composant et transmises à l'ordinateur de contrôle (3) via le réseau Ethernet (4),
- d) afficher à l'aide d'un écran relié à l'ordinateur de contrôle (3), les données de référence et les signaux de contrôle à des fins de surveillance et/ou de comparaison par un opérateur,
- e) et enregistrer selon le cas les données de référence et les signaux de contrôle dans une mémoire de l'ordinateur de contrôle (3).

2. Procédé selon la revendication 1 ,
**caractérisé en ce qu'**il consiste à contrôler l'ensemble des composants du système avionique (1).

3. Procédé selon l'une quelconque des revendications précédentes,
**caractérisé en ce qu'**il consiste à afficher les résultats des fonctions de test automatiques au démarrage intégrés à un calculateur du système avionique (1) et se rapportant à chaque composant du système avionique (1).

4. Procédé selon l'une quelconque des revendications précédentes,
**caractérisé en ce qu'**il consiste à choisir en tant que premiers signaux de contrôle des valeurs de stimulation et à injecter ces valeurs de stimulation en temps réel aux bornes de sortie de l'interface de sortie de chaque composant.

5. Procédé selon la revendication 4,
**caractérisé en ce qu'**il consiste à injecter les valeurs de stimulation individuellement l'une après l'autre.

6. Procédé selon l'une quelconque des revendications précédentes,
**caractérisé en ce qu'**il consiste à acquérir en temps réel et en tant que seconds signaux de contrôle, soit les états de fonctionnement de toutes les bornes d'entrée de l'interface d'entrée de chaque composant, soit les valeurs physiques mesurées aux dites bornes d'entrée.

7. Procédé selon la revendication 6,
**caractérisé en ce qu'**il consiste à acquérir les signaux de contrôle se rapportant aux bornes d'entrée selon une fréquence d'environ 2 Hz.

8. Procédé selon l'une quelconque des revendications précédentes,
**caractérisé en ce qu'**il consiste à contrôler des fonctionnalités d'un aéronef pilotées par le système avionique (1).

9. Procédé selon la revendication 8,
**caractérisé en ce que** lesdites fonctionnalités comprennent la gestion du carburant, la gestion des moteurs, la flottabilité ou la gestion de l'extinction des incendies.

10. Procédé selon l'une quelconque des revendications 1 à 9,
**caractérisé en ce qu'**il consiste à intégrer dans le logiciel de fonctionnement de chaque équipement géré par le système avionique (1), des instructions de contrôle pour générer et acquérir des signaux fonctionnellement compatibles avec l'ordinateur de contrôle (3).

11. Procédé selon la revendication 10,
**caractérisé en ce qu'**il consiste à inhiber les instructions de contrôle dans l'état de fonctionnement opérationnel de l'aéronef et à activer lesdites instructions de contrôle dans l'état de maintenance de l'aéronef.

12. Système de contrôle pour mettre en oeuvre le procédé de contrôle conforme à l'une quelconque des revendications 1 à 11,
**caractérisé en ce qu'**il comprend :
- un ordinateur de contrôle (3) associé à un écran d'affichage ou une interface graphique utilisateur,
- au moins un logiciel pour gérer notamment des signaux de contrôle et des données de référence destinés au contrôle,
- un réseau Ethernet (4) reliant l'ordinateur de contrôle (3) au système avionique (1) ou à au moins un composant du système avionique (1) de manière à échanger notamment des signaux de contrôle et des données de référence,
- des moyens de contrôle (2a) embarqués comprenant des moyens de lecture et d'écriture banalisés de signaux et de données de chaque composant,
- et des moyens de transmission (2b) embarqués pour acheminer, via le réseau Ethernet (4), des signaux ou des données entre au moins un composant du système avionique (1) et l'ordinateur de contrôle (3).

13. Système selon la revendication 12,
**caractérisé en ce que** les moyens de lecture et d'écriture banalisés, intégrés dans chaque composant du système avionique (1) comportent des moyens de traitement de chaînes d'acquisitions analogiques des composants dudit système avionique (1) ainsi que des moyens pour transformer lesdites acquisitions en valeurs digitales, lesquelles sont mises à disposition en temps réel sur un port du réseau Ethernet (4).

14. Système selon l'une quelconque des revendications 12 ou 13,
**caractérisé en ce que** les moyens de contrôle (2a) et les moyens de transmission (2b) sont embarqués dans l'aéronef.

## Claims

1. Method for inspecting the integrity of at least one component of an avionics system (1) installed in an aircraft, said method consisting of inspecting the integrity of said component in terms of electrical installation and data acquisition and transmission,
**characterised in that** it consists of:
- a) using an Ethernet network (4) connecting the avionics system (1) to an inspection computer (3) to exchange inspection signals;
- b) using the inspection computer (3) to generate first inspection signals that are transmitted to the component and/or to acquire second inspection signals that come from the component;
- c) using data read and write means of a computer of the avionics system (1) to generate reference data relating to the component and transmitted to the inspection computer (3) via the Ethernet network (4);
- d) using a screen connected to the inspection computer (3) to display the reference data and the inspection signals for the purposes of monitoring and/or comparison by an operator;
- e) and recording as appropriate the reference data and the inspection signals in a memory of the inspection computer (3).

2. Method according to Claim 1,
**characterised in that** it consists of inspecting all of the components of the avionics systems (1).

3. Method according to either one of the preceding claims,
**characterised in that** it consists, on starting, of displaying the results of automatic test functions that are incorporated in a computer of the avionics system (1) and that relate to each component of the avionics system (1).

4. Method according to any one of the preceding claims,
**characterised in that** it consists of selecting stimulation values as first inspection signals, and of injecting said stimulation values in real time into the outlet terminals of the outlet interface of each component.

5. Method according to Claim 4,
**characterised in that** it consists of injecting the stimulation values individually one after another.

6. Method according to any one of the preceding claims,
**characterised in that** it consists of acquiring in real time and as second inspection signals either the operating states of all of the input terminals of the input interface of each component or the physical values measured at said input terminals.

7. Method according to Claim 6,
**characterised in that** it consists of acquiring the inspection signals relating to the input terminals at a frequency of about 2 Hz.

8. Method according to any one of the preceding claims,
**characterised in that** it consists of inspecting functionalities of an aircraft that are under the control of the avionics system (1).

9. Method according to Claim 8,
**characterised in that** said functionalities comprise fuel management, engine management, buoyancy, or managing fire-fighting.

10. Method according to any one of Claims 1 to 9,
**characterised in that** it consists of incorporating inspection instructions in the operating software of each piece of equipment managed by the avionics system (1), said instructions serving to generate and to acquire signals that are functionally compatible with the inspection computer (3).

11. Method according to Claim 10,
**characterised in that** it consists of inhibiting the inspection instructions when the aircraft is in its operational functioning state, and in activating said inspection instructions when the aircraft is in its maintenance state.

12. Inspection system for implementing the inspection method in accordance with any one of Claims 1 to 11,
**characterised in that** the system comprises:
- an inspection computer (3) associated with a display screen or a user graphics interface;
- at least software for generating, in particular, inspection signals and reference signals for inspection purposes;
- an Ethernet network (4) connecting the inspection computer (3) to the avionics system (1) or to at least one component of the avionics system (1), so as to exchange, in particular, inspection signals and reference data;
- on-board inspection means (2a) including common means for reading and writing signals and data of each component;
- and on-board transmission means (2b) for conveying signals or data via the Ethernet network (4) between at least one component of the avionics system (1) and the inspection computer (3).

13. System according to Claim 12,
**characterised in that** the common means for reading and writing incorporated in each component of the avionics system (1) include means for processing analog acquisition chains of the components of said avionics system (1) and means for transforming said acquisitions into digital values, which values are made available in real time on a port of the Ethernet network (4).

14. System according to either one of Claims 12 and 13,
**characterised in that** the inspection means (2a) and the transmission means (2b) are on board the aircraft.

## Patentansprüche

1. Verfahren zur Kontrolle der Integrität mindestens einer Komponente eines in einem Luftfahrzeug installierten Flugzeugelektroniksystems (1), wobei das Verfahren darin besteht, die Integrität der Komponente bezüglich ihrer Elektroinstallation und der Datenerfassung und -übertragung zu kontrollieren,
**dadurch gekennzeichnet, dass** es darin besteht:
- a) das Ethernet (4) zu verwenden, welches das Flugzeugelektroniksystem (1) mit einem Kontrollrechner (3) verbindet, um Kontrollsignale auszutauschen,
- b) mit Hilfe des Kontrollrechners (3) erste Kontrollsignale zu erzeugen, die zur Komponente übertragen werden und/oder zweite Kontrollsignale zu erfassen, die von der Komponente stammen,
- c) Mittel zum Lesen und Schreiben von Daten eines Rechners des Flugzeugelektroniksystems (1) zu verwenden, um Bezugsdaten zu erzeugen, die sich auf die Komponente beziehen und zum Kontrollrechner (3) über das Ethernet (4) übertragen werden,
- d) mit Hilfe eines an den Kontrollrechner (3) angeschlossenen Bildschirms die Bezugsdaten und die Kontrollsignale anzuzeigen zu Zwecken der Überwachung und/oder eines Vergleichs durch eine Bedienungsperson,
- e) und von Fall zu Fall die Bezugsdaten und die Kontrollsignale in einem Speicher des Kontrollrechners (3) abzuspeichern.

2. Verfahren nach Anspruch 1,
**dadurch gekennzeichnet, dass** es darin besteht, die Gesamtheit aller Komponenten des Flugzeugelektroniksystems (1) zu kontrollieren.

3. Verfahren nach einem der vorstehenden Ansprüche,
**dadurch gekennzeichnet, dass** es darin besteht, die Ergebnisse von automatischen Testfunktionen zu Beginn anzuzeigen, welche in einem Rechner des Flugzeugelektroniksystems (1) enthalten sind, und sich auf jede Komponente des Flugzeugelektroniksystems (1) beziehen.

4. Verfahren nach einem der vorstehenden Ansprüche,
**dadurch gekennzeichnet, dass** es darin besteht, als erste Kontrollsignale Stimulationswerte auszuwählen und diese Stimulationswerte in Echtzeit in die Ausgangsklemmen der Ausgangsschnittstelle einer jeden Komponente einzugeben.

5. Verfahren nach Anspruch 4,
**dadurch gekennzeichnet, dass** es darin besteht, die Stimulationswerte einzeln, einen nach dem anderen, einzugeben.

6. Verfahren nach einem der vorstehenden Ansprüche,
**dadurch gekennzeichnet, dass** es darin besteht, in Echtzeit und als zweite Kontrollsignale entweder die Betriebszustände aller Eingangsklemmen der Eingangsschnittstelle einer jeden Komponente oder an den Eingangsklemmen gemessene physikalische Werte zu erfassen.

7. Verfahren nach Anspruch 6,
**dadurch gekennzeichnet, dass** es darin besteht, die Kontrollsignale, die sich auf die Eingangsklemmen beziehen, mit einer Frequenz von ungefähr 2 Hz zu erfassen.

8. Verfahren nach einem der vorstehenden Ansprüche,
**dadurch gekennzeichnet, dass** es darin besteht, die Funktionalitäten eines von dem Flugzeugelektroniksystem (1) gesteuerten Luftfahrzeugs zu kontrollieren.

9. Verfahren nach Anspruch 8,
**dadurch gekennzeichnet, dass** die Funktionalitäten? das Treibstoffmanagement, das Motorenmanagement, den Auftrieb oder das Brandbekämpfungsmanagement umfassen.

10. Verfahren nach einem der Ansprüche 1 bis 9,
**dadurch gekennzeichnet, dass** es darin besteht, in dem Betriebsprogramm einer jeden Ausrüstung, die von dem Flugzeugelektroniksystem (1) verwaltet wird, Steuerbefehle zu integrieren zur Erzeugung und Erfassung von Signalen, die funktionell mit dem Kontrollrechner (3) kompatibel sind.

11. Verfahren nach Anspruch 10,
**dadurch gekennzeichnet, dass** es darin besteht, Kontrollbefehle während des operationellen Betriebs des Luftfahrzeugs zu unterdrücken, und diese Kontrollbefehle während der Wartung des Luftfahrzeugs zu aktivieren.

12. Kontrollsystem zur Durchführung des Kontrollverfahrens nach einem der Ansprüche 1 bis 11,
**gekennzeichnet durch**:
- einen Kontrollrechner (3) verbunden mit einem Anzeigebildschirm oder einer graphischen Anwenderschnittstelle,
- mindestens ein Programm zum Verwalten insbesondere von Kontrollsignalen und Bezugsdaten, die der Kontrolle dienen,
- das Ethernet (4), welches den Kontrollrechner (3) mit dem Flugzeugelektroniksystem (1) oder mit mindestens einer Komponente des Flugzeugelektroniksystems (1) derart verbindet, dass insbesondere Kontrollsignale und Bezugsdaten ausgetauscht werden,
- eingebaute Kontrollmittel (2a) mit handelsüblichen Mitteln zum Lesen und Schreiben von Signalen und Daten einer jeden Komponente,
- und eingebaute Übertragungsmittel (2b) zum Weiterleiten von Signalen oder Daten über das Ethernet (4) zwischen mindestens einer Komponente des Flugzeugelektroniksystems (1) und dem Kontrollrechner (3).

13. System nach Anspruch 12,
**dadurch gekennzeichnet, dass** die handelsüblichen Schreib- und Lesemittel, die in jede Komponente des Flugzeugelektroniksystems (1) integriert sind, Mittel zum Verarbeiten von analogen Erfassungsketten von Komponenten des Flugzeugelektroniksystems (1) sowie Mittel zum Umwandeln der erfassten Werte in digitale Werte aufweisen, die in Echtzeit an einem Port des Ethernets (4) zur Verfügung gestellt werden.

14. System nach einem der Ansprüche 12 oder 13,
**dadurch gekennzeichnet, dass** die Kontrollmittel (2a) und die Übertragungsmittel (2b) in das Luftfahrzeug eingebaut sind.
